# EUROPÄISCHE PATENTANMELDUNG

(11) **EP 0 873 953 A1**
(43) Veröffentlichungstag der Anmeldung: **28.10.1998**
(21) Anmeldenummer: 98106361.3
(22) Anmeldetag: 07.04.1998
(51) Int. Cl.: B65G 53/46

(54) **Entleervorrichtung für Bulk-Container für teilchenförmige Schüttgüter und seine Verwendung**

(30) Priorität: 26.04.1997 DE 19717732
(71) Anmelder: Degussa Aktiengesellschaft, 60311 Frankfurt (DE)
(72) Erfinder: Kohlen, Rainer, Dr., 61273 Wehrheim (DE); Ruhs, Alexander, Dr., 79618 Rheinfelden (DE); Leonhardt, Wolfgang, Dr., 60314 Frankfurt (DE)

(57) **Zusammenfassung**

Bisherige Probleme bei der Entleerung von Bulk-Containern unter Verwendung einer Durchblase-Zellenradschleuse (1) lassen sich durch die erfindungsgemäße Entleervorrichtung beheben, worin ein Entlüftungsstutzen (3) der Zellenradschleuse über einen beidseitig offenen Filterschlauch (2) mit dem Innenraum des Containers in Verbindung steht.

## Beschreibung

Die Erfindung richtet sich auf eine Entleervorrichtung für Bulk-Container für teilchenförmige Schüttgüter, insbesondere Pulver und Granulate, unter Einsatz einer Durchblase-Zellenradschleuse und seine Verwendung, also ein Verfahren zum Entleeren des Bulk-Containers.

Teilchenförmige Schüttgüter, wie Pulver und Granulate, werden in großem Umfang in Bulk-Containern vom Hersteller zum Verwender transportiert und bei letzterem entleert. Unter Bulk-Containern werden nachfolgend sowohl sackförmige Gebinde, etwa sogenannte Bulk-Bags mit einem Füllvolumen von einigen 100 l bis zu mehreren m³, als auch Silos und andere behälterförmige Gebinde mit oder ohne sackförmigem Inlet mit einem Füllvolumen von 5 bis 50 m³, insbesondere 10 bis 30 m³, verstanden. Die behälterförmigen Großgebinde sind üblicherweise auf der Ladefläche eines Straßen- oder Schienenfahrzeugs derart fixiert, daß durch Öffnen der an einer Seite befindlichen Auslauföffnung des Gebindes und Kippen der Ladefläche des Fahrzeugs der Inhalt entleert werden kann.

Gemäß einer bekannten Ausführungsform zum Entleeren derartiger Bulk-Container, insbesondere Großgebinden mit einem Inlet, wird eine mit dem Bulk-Container in Verbindung stehende Auslaufvorrichtung, im einfachsten Fall kann es sich direkt um den Auslauf eines Container-Inlets handeln, an eine Durchblase-Zellenradschleuse angekuppelt. Durch Inbetriebnahme des Motors für das Zellenrad und Zufuhr von Fördergas, im allgemeinen Druckluft, zum Durchblaseteil der Zellenradschleuse wird in die Zellenradschleuse fallendes Schüttgut pneumatisch über eine Förderleitung dem Bestimmungsort, etwa einem ortsfesten Silo oder Reaktionsbehälter, zugeführt. Hauptproblem einer derartigen Entleervorrichtung liegt in der Entlüftung der durch den Überdruck im Durchblaseteil der Zellenradschleuse entstehenden Leckageluft und der zur Produktzuführung hin mit den Zellenrädern geförderten Druckluft. Eine ungenügende Entlüftung blockiert durch entstehende Luftpolster die Produktzufuhr und damit den Entleervorgang. Zur Entlüftung der Durchblase-Zellenradschleuse wird bisher ein an der Zellenradschleuse angeordneter Entlüftungsstutzen mittels eines Schlauches mit dem Innenraum des Bulk-Containers verbunden; soweit ein Inlet vorhanden ist, reicht der Schlauch in das Inlet. Je nach dem geforderten Förderdruck und der Korngröße des Schüttguts kommt es aber zu erheblichen betrieblichen Störungen beim Entleeren: Mit zunehmendem Druck wird der Container beziehungsweise das Inlet überdrückt, so daß Förderluft aus dem Behälter beziehungsweise Inlet gedrückt werden und dadurch außen starke Staubentwicklung auftreten kann.

Aufgabe der vorliegenden Erfindung ist die Bereitstellung einer verbesserten Entleervorrichtung für Bulk-Container, welche die vorgenannten Nachteile nicht mehr aufweist.

Gefunden wurde eine Entleervorrichtung für Bulk-Container für teilchenförmige Schüttgüter, umfassend eine Durchblase-Zellenradschleuse (1), eine Kupplung (10) zum Anschluß der Durchblase-Zellenradschleuse an eine mit dem Bulk-Container in Verbindung stehende Auslaufvorrichtung (5), eine Leitung (4) zur Zufuhr von Fördergas in und eine Förderleitung (6) für fluidisiertes Schüttgut aus der Durchblase-Zellenradschleuse, welche dadurch gekennzeichnet ist, daß die Zellenradschleuse oberhalb des Zellenrads mindestens einen Entlüftungsstutzen (3) aufweist, der mit dem Innenraum des Bulk-Containers über einen beidseitig offenen Filterschlauch (2) in Verbindung steht.

Erfindungsgemäß wird das Entlüftungsproblem dadurch gelöst, daß anstelle bisher üblicher Schläuche oder Rohrleitungen zwischen dem oder den Entlüftungsstutzen der Zellenradschleuse und dem Bulk-Container beziehungsweise dessen Inlet oben und unten offene Filterschläuche eingesetzt werden. Es ist möglich, daß ein Teil der Verbindung zwischen der Zellenradschleuse und dem Bulk-Container in Form eines üblichen Schlauches ausgebildet ist, sofern ein ausreichend langes Stück der Verbindung als Filterschlauch ausgebildet ist. Durch die erfindungsgemäße Verwendung eines Filterschlauches kann ein Teil des Fördergases, meistens Luft, in den Bulk-Container beziehungsweise dessen Inlet pendeln und der Fördergasüberschuß kann über den Filterschlauch staubfrei nach außen entweichen. Eine Staubentwickung durch Überdruck eines Bulk-Containers sowie Entleerstörungen durch Gaspolster werden vermieden.

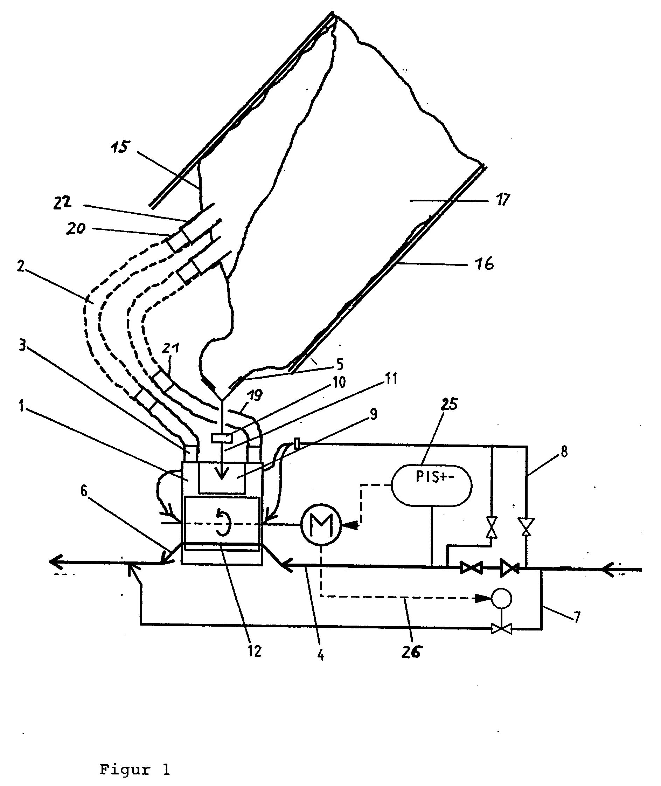

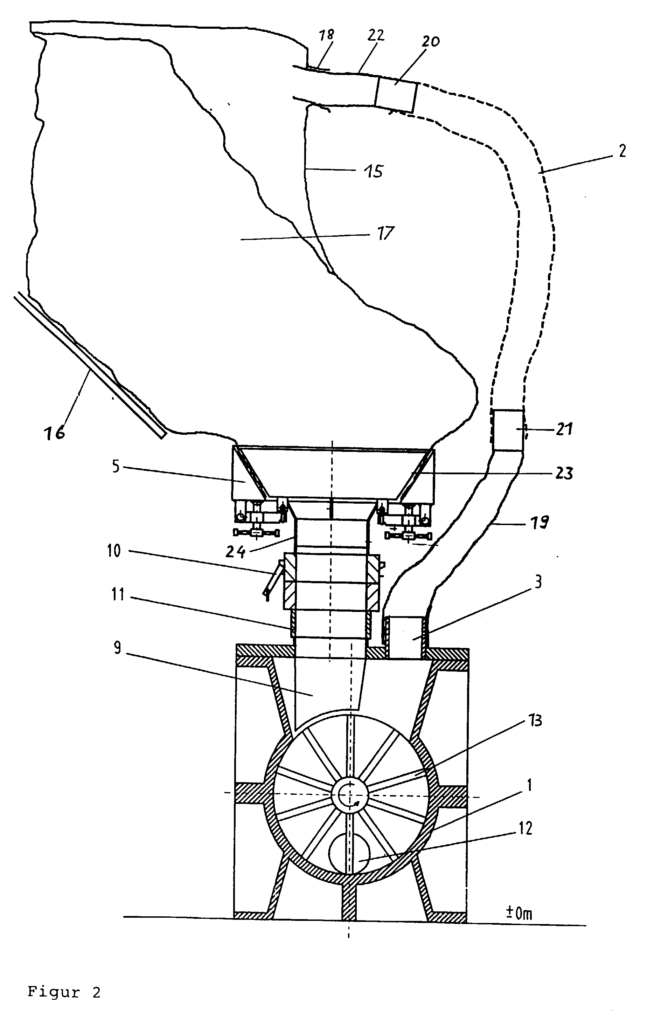

Figur 1 zeigt eine schematische Darstellung einer Entleervorrichtung. Figur 2 zeigt einen Querschnitt durch eine bevorzugte Entleervorrichtung.

Anhand der Figuren wird die Erfindung näher erläutert. Figur 1 zeigt eine Durchblase-Zellenradschleuse (1), dessen Zellenrad ((13) in Fig. 2) mittels eines Motors (14) angetrieben wird, eine Leitung (4) zur Zufuhr von Fördergas zum Durchblaseteil (12) der Zellenradschleuse und Förderleitung (6) für das fluidisierte Fördergut. Die Zellenradschleuse weist zwei Entlüftungsstutzen (3), ferner - in Fig. 1 in sehr schematisierter Form, in Fig. 2 aber deutlich erkennbar dargestellt - einen Zulaufstutzen (11) für das Fördergut und einen Schacht (9) auf, wobei durch letzteren das Fördergut unmittelbar in die Zellen des Zellenrads geleitet wird. Durch die Trennung von Produktzuführung und Entlüftung werden Störungen innerhalb der Zellenradschleuse, etwa ungenügende Befüllung der Zellen und zu hoher Fördergutaustrag über den Entlüftungsstutzen und damit gegebenenfalls Verstopfungen in der Entlüftungsleitung (19, 2, 22) vermieden.

Zweckmäßigerweise sind ein oder mehrere Entlüftungsstutzen (11) mit ausreichend großem Nenndurchmesser im Deckelbereich der Zellenradschleuse angeordnet, vorzugsweise parallel zum senkrecht angeordneten Zulaufstutzen. Fig. 1 zeigt ferner einen in Kippstellung befindlichen Bulk-Container (16) mit Inlet (15) und Schüttgut (17) - das Fahrzeug mit der kippbaren Ladefläche, auf welcher der Bulk-Container fixiert ist, ist nicht gezeigt. Die Auslauföffnung des Inlets ist mit einer Auslaufvorrichtung (5) - gemäß Fig. 2 als Klemmvorrichtung ausgebildet - verbunden, letztere mittels einer Kupplung (10) mit dem Zulaufstutzen (11) der Durchblase-Zellenradschleuse (1) verbunden. An die beiden Entlüftungsstutzen (11) schließt sich zunächst ein unteres Schlauchstück (19), sodann über eine Schlauchkupplung (21) der beidseitig offene Filterschlauch (2) an, dessen oberes Ende über eine weitere Schlauchkupplung (20) und ein oberes Schlauchstück (22) mit dem Innenraum des Bulk-Containers in Verbindung steht. Das obere Schlauchstück ist gemäß Fig. 2 in einer im Inlet befindlichen Öffnung (18) fixiert. Fig. 1 zeigt ferner eine von der Fördergasleitung (4) abgezweigte Leitung (7) zur Unterstützung der pneumatischen Förderung in der Förderleitung (6) und eine abgezweigte Leitung (8) zu den Dichtungen der Durchblase-Zellenradschleuse. Desweiteren zeigt Fig. 1 zweckmäßige Schließ- und Regelventile, einen PIS-Regler (25) und Regelleitungen (26) für eine Stopferschaltung, womit die Zellenradschleuse bei Verstopfung automatisch abgeschaltet wird; diese Schaltung führt auch zur Abschaltung der Beiluft durch Leitung (7) bei Stillstand des Motors (14).

Figur 2 zeigt eine Entleervorrichtung, umfassend eine Durchblase-Zellenradschleuse (1) mit Zellenrad (13), Durchblaseteil (12), Zulaufstutzen (11) und Entlüftungsstutzen (3), ferner eine Kupplung (10), eine als Klemmvorrichtung ausgebildete Auslaufvorrichtung (5), Schlauchstücke (19) und (22) mit den Schlauchkupplungen (21) und (20) sowie den erfindungswesentlichen Filterschlauch (2). Die Auslauföffnung des Inlets (15) des Bulk-Containers (angedeutet als (16)) ist in der Klemmvorrichtung (5) eingeklemmt, wodurch der Sackauslauf freigehalten wird. Die als Klemmvorrichtung ausgebildete Auslaufvorrichtung (5) umfaßt einen konisch ausgebildeten Auslauf (23) und einen zylindrischen Stutzen (24) zum Anschluß an die Kupplung (10).

Als Filterschlauch werden handelsübliche Filterschläuche eingesetzt, deren Porenweite so gewählt wird, daß Staub zuverlässig zurückgehalten wird.

Zum Entleeren der Bulk-Container verwendet man eine erfindungsgemäße Vorrichtung: Hierbei wird eine mit dem Bulk-Container in Verbindung stehende Auslaufvorrichtung (5) mittels einer Kupplung (10) an eine Durchblase-Zellenradschleuse angeschlossen, der Entlüftungsstutzen (3) direkt oder unter Zwischenschaltung eines Schlauchstücks mit einem Filterschlauch (2) verbunden, das offene Ende des Filterschlauchs oder ein sich daran anschließendes Schlauchstück in den Bulk-Container zurückgeführt und durch Inbetriebnahme des Zellenradmotors und Durchblasen von Förderluft durch die Zellenradschleuse das Fördergut pneumatisch aus dem Container entleert.

Die Entleervorrichtung zeichnet sich durch störungsfreien Betrieb und Staubfreiheit beim Entleeren von Bulk-Containern aus. Die Entleervorrichtung ist transportabel und ebenerdig aufstellbar. Die Entleerung kann im Überdruckbereich, wie er auch zur pneumatischen Förderung von Schüttgütern mit niedrigem Schüttgewicht als auch Schüttgütern mit hohem Schüttgewicht üblich ist, beispielsweise im Bereich von 0,2 bis 3 bar, ü, durchgeführt werden. Zudem ist die Bauhöhe der Entleervorrichtung üblicherweise so niedrig, daß auch Bulk-Container auf Fahrzeugen mit niedrig liegender Ladefläche problemlos entleert werden können.

## Patentansprüche

1. Entleervorrichtung für Bulk-Container für teilchenförmige Schüttgüter, umfassend eine Durchblase-Zellenradschleuse (1), eine Kupplung (10) zum Anschluß der Durchblase-Zellenradschleuse an eine mit dem Bulk-Container in Verbindung stehende Auslaufvorrichtung (5), eine Leitung (4) zur Zufuhr von Fördergas in und eine Förderleitung (6) für fluidisiertes Schüttgut aus der Durchblase-Zellenradschleuse,
dadurch gekennzeichnet,
daß die Zellenradschleuse oberhalb des Zellenrads mindestens einen Entlüftungsstutzen (3) aufweist, der mit dem Innenraum des Bulk-Containers über einen beidseitig offenen Filterschlauch (2) in Verbindung steht.

2. Entleervorrichtung nach Anspruch 1,
dadurch gekennzeichnet,
daß zwecks Trennung der Produktzuführung und Entlüftung die Durchblase-Zellenradschleuse mit einem Zulaufstutzen (11) für das Schüttgut und einem zwischen diesem Zulaufstutzen und dem Zellenrad (13) angeordneten Schacht (9) ausgestattet ist.

3. Entleervorrichtung nach Anspruch 1 oder 2,
dadurch gekennzeichnet,
daß die Durchblase-Zellenradschleuse zwei Entlüftungsstutzen aufweist, welche über einen gemeinsamen oder zwei getrennte Filterschläuche mit dem Innenraum des Bulk-Containers in Verbindung stehen.

4. Entleervorrichtung nach einem der Ansprüche 1 bis 3,
dadurch gekennzeichnet,
daß sie zur Entleerung von Bulk-Containern mit Inlet als Auslaufvorrichtung (5) eine mit einem Auslaufstutzen für das Schüttgut ausgestattete Klemmvorrichtung für den Inletauslauf aufweist.

5. Verfahren zum Entleeren von Bulk-Containern für teilchenförmige Schüttgüter unter Verwendung einer Durchblase-Zellenradschleuse,
dadurch gekennzeichnet,
daß man eine Vorrichtung gemäß einem der Ansprüche 1 bis 4 verwendet, wobei man eine mit dem Bulk-Container in Verbindung stehende Auslaufvorrichtung (5) mittels einer Kupplung (10) an eine Durchblase-Zellenradschleuse mit einem oder mehreren Entlüftungsstutzen (3) anschließt, den/die Entlüftungsstutzen (3) direkt oder über ein Schlauchstück mit einem Filterschlauch (2) verbindet, das offene Ende des Filterschlauchs direkt oder über ein Schlauchstück in den Bulk-Container zurückführt und durch Inbetriebnahme des Zellenradmotors und Durchblasen von Förderluft durch die Zellenradschleuse das Fördergut pneumatisch aus dem Container entleert.
